(19) **Europäisches Patentamt**
**European Patent Office**
**Office européen des brevets**

(11) **EP 4 663 293 A1**

(12) **EUROPEAN PATENT APPLICATION**

(43) Date of publication:
**17.12.2025 Bulletin 2025/51**

(21) Application number: **24217317.7**

(22) Date of filing: **03.12.2024**

(51) International Patent Classification (IPC):
***B01J 35/38*** *(2024.01)* ***B01J 35/40*** *(2024.01)*

(52) Cooperative Patent Classification (CPC):
**B01J 35/38; B01J 35/40;** B01J 27/14

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sasol Germany GmbH**
**20537 Hamburg (DE)**

(72) Inventors:
• SCHÔNEBORN, Marcos
  22303 Hamburg (DE)
• HARMENING, Thomas
  48159 Münster (DE)
• BÛTTNER, Hendrik
  22763 Hamburg (DE)

(74) Representative: **Müller Schupfner & Partner Patent- und Rechtsanwaltspartnerschaft mbB (Hamburg)**
**Schellerdamm 19**
**21079 Hamburg (DE)**

(54) **HYDROTHERMALLY STABLE, ATTRITION-RESISTANT PHOSPHATED ALUMINIUM OXIDE MATERIAL**

(57)     The invention relates to a phosphated aluminium oxide material, for use as a catalyst support, which has a median particle size (D50) of between 40 and 170 $\mu$m and good attrition resistance even after exposure to hydrothermal conditions.

EP 4 663 293 A1

**Description**

The present invention relates to a phosphated aluminium oxide material for use as a catalyst support, which has good attrition resistance even after exposure to hydrothermal conditions.

BACKGROUND

Various catalytic processes require catalyst support particles that are well-fluidizable and mechanically stable and attrition-resistant to enable long-term stable operation. This is particularly true for heterogeneously catalysed processes operating under slurry or fluidized bed condition. These processes require catalyst support particles in a certain well-defined particle size range to enable proper fluidization behavior, such as for example particles classified as Geldart Group A powders. Due to the high gas velocities in these processes, mechanical stress is induced by collisions, e.g., with reactor walls and between the catalyst particles. Therefore, a further requirement is a high attrition resistance of the catalyst support particle to avoid breakage and the generation of fines that can lead to loss of active material, filter blockage and related issues.

Moreover, in several processes such as reforming, hydrogenation, oxychlorination etc. water is either used as a reactant or is generated during the process at elevated temperatures. This can lead to a reduction of the mechanical integrity of the support material resulting in a drastic decrease in attrition resistance.

There is a need for an alumina-based catalyst support with good mechanical strength even under hydrothermal conditions.

SUMMARY OF THE INVENTION

The present invention provides a phosphated aluminium oxide material having a phosphorus content, with all phosphorus accounted for as the equivalent $P_2O_5$, of between 1 and 20 wt%, preferably between 2 and 15 wt%, with respect to the weight of the phosphated aluminium oxide material, characterised in that the phosphated aluminium oxide material has:

(a) a median particle size (D50) of between 40 and 170 $\mu$m; and
(b) an attrition index A of less than 14%, preferably of less than 8 %, and most preferably of less than 6%, after treating the phosphated aluminium oxide material at 200°C for 2 hours in water, where

$$A\,[\%] = F6h - Fi$$

with Fi = Volume fraction of particles <20 $\mu$m before performing the attrition test [%] and F6h = Volume fraction of particles <20 $\mu$m after performing the attrition test for 6 hours [%].

The phosphated aluminium oxide material may have a BET surface area of between 2 and 200 $m^2$/g.

The phosphate content, with all phosphorus accounted for as the equivalent $P_2O_5$, may be of at least 2 wt% with respect to the weight of the phosphated aluminium oxide material.

The phosphated aluminium oxide material preferably comprises at least 70 wt% of $Al_2O_3$ and a phosphate / phosphorus compound wherein phosphorus in such phosphorus compound is in oxidation state V.

The phosphated aluminium oxide material may have a median particle size (D50) of between 50 and 165 $\mu$m, more preferably between 70 and 100 $\mu$m.

The phosphated aluminium oxide material may have a particle Relative Span Factor (RSF) of less than 1.2, preferably less than 1.1, most preferably less than or equal to 1.02, where RSF = (D90 - D10) / D50.

The phosphated aluminium oxide material may have a particle size distribution such that 10% of the particles are smaller than 110 $\mu$m (i.e. D10 < 110 $\mu$m), preferably smaller than 60 $\mu$m (i.e. D10 < 60$\mu$m), and 90% of the particles are smaller than 240$\mu$m (i.e. D90 < 240 $\mu$m), preferably smaller than 120 $\mu$m (i.e. D90 < 120 $\mu$m) resulting in the following preferred ranges: D10 < 110 $\mu$m and D90 < 240 $\mu$m or D10 < 60 $\mu$m and D90 < 120 $\mu$m.

The phosphated aluminium oxide material may have a mean pore radius of between 1.5 and 5 nm. In the determination of the mean pore radius macropores (of > 25 nm radius) are not considered.

The phosphated aluminium oxide material may have a silica content of less than 0.5% with respect to the weight of the phosphated aluminium oxide material.

The phosphated aluminium oxide material may be prepared by impregnating an aluminium oxide starting material with a phosphate precursor and drying and calcining the so-impregnated aluminium oxide starting material in the presence of air so as to obtain the phosphated aluminium oxide material. The calcination is carried out for at least 1 h at a temperature of at least 500°C. The aluminium oxide starting material may be an alpha alumina, a gamma alumina, a delta alumina, or a theta alumina, or a mixture thereof. The phosphate precursor may be phosphoric acid, phosphonic acid, ammonium phosphates ($NH_4H_2PO_4$, $(NH_4)_2HPO_4$), $(NH_4)_3PO_4$), or ammonium polyphosphate, preferably phosphoric acid.

The Relative Span Factor/particle size distribution, being as it is in a well-defined range, and median particle size of the phosphated aluminium oxide material of the invention are conducive to good fluidizability of the material, such that they are well-fluidized in various fluidized bed applications.

Moreover, the low attrition index A suits the phosphated aluminium oxide material of the invention, renders it mechanically stable and attrition-resistant to enable long-term stable operation in fluidized bed applications.

## DETAILED DESCRIPTION OF THE INVENTION

The invention will now be described in more detail with reference to the following non-limiting examples.

Analytical Methods and Definitions

*Method for measurement of BET surface area and pore radius*

Surface area and pore radius were measured with $N_2$ physisorption using typical volumetric devices, like the Quadrasorb from Quantachrome, at the temperature of liquid nitrogen. The surface area was determined using BET theory (DIN ISO 9277) and the pore radius distribution and the resultant pore volume were determined from the desorption arm of the isotherm, on the basis of the Barrett, Joyner and Halenda (BJH) theory, (as described in DIN 66134). With the BJH method, pore volume and pore size distribution are calculated from desorption.

*Method for measuring the particle size distribution*

The particle size distribution, the particle size and the D-values were determined via laser diffraction on a volume basis on a suspension of the powder in water using a Malvern Mastersizer according to ISO 13320:2009. The particle size as mentioned herein always refers to a diameter.

*Method for measuring the attrition index*

An aluminium oxide or the phosphated aluminium oxide material in powder form is subjected to hydrothermal treatment at 200°C for 2 hours under agitation with 400 rpm in water.

Prior to performing the attrition test, the fraction of particles with particle size less than 20 $\mu$m was measured via laser diffraction using a Malvern Mastersizer (Fi).

For purposes of the test, 54 g of powder with a median particle size (D50) of between 40 and 170 $\mu$m is mixed with 6 g water and added to a 30 mm diameter metal tube having two nozzles of 0,4 mm in diameter at the bottom of the tube. The water is added during the attrition test to avoid electrostatic effects. The test is performed at ambient temperature. A constant airflow of 380 Liter/hour (controlled by a flowmeter) is applied to the tube, thereby fluidizing the powder for a duration of 6h. During this procedure fine particles (<20 $\mu$m) are generated by the induced mechanical stress (i.e. attrition occurs). After six hours the fraction of particles with particle size <20 $\mu$m is determined once again using the Malvern Mastersizer (F6h).

The attrition index A represents the increase of the fraction of particles <20 $\mu$m in size and is calculated by A (%) = F6h (%) - Fi (%).

Examples

Comparative Example 1

An aluminium oxide (0 wt% $P_2O_5$) in powder form (PURALOX SCCa-5/200, Sasol) having a BET surface area of 189 m²/g, a pore radius of 46 Å and a median particle size (D50) of 74.3 $\mu$m was subjected to hydrothermal treatment at 200°C for 2 hours under agitation with 400 rpm in water.

The fraction of particles of the aluminium oxide powder with particle size <20 $\mu$m after such hydrothermal treatment (Fi) was measured via laser diffraction using a Malvern Mastersizer.

The aluminium oxide powder was thereafter subjected to an attrition test which comprised fluidization of the particles as described above for 6 hours. Again, the fraction of particles with particle size less than <20 $\mu$m was determined (F6h). The attrition index after hydrothermal treatment was assessed to be 14.0%.

Example 2

A phosphated aluminium oxide material having a phosphate content ($P_2O_5$) of 1 wt% with respect to the weight of the phosphated aluminium oxide material (as assessed by ICP-OES), a BET surface area of 189 $m^2$/g and a median particle size (D50) of 74.9 $\mu$m was prepared by impregnating an 1,5 kg of aluminium oxide starting material with BET surface area of 189 $m^2$/g (PURALOX SCCa-5/200, Sasol) with phosphoric acid (23.8 g of v/v=85% in 669 ml of $H_2O$). The so-impregnated aluminium oxide starting material was dried for 16 hours at 120°C and then calcined at 550°C for 3 hours.
The phosphated aluminium oxide material was subjected to hydrothermal treatment at 200°C for 2 hours in water under agitation with 400 rpm. The fraction of particles with particle size <20 $\mu$m after hydrothermal treatment (Fi) was measured. The material was thereafter subjected to the described attrition test for 6 hours. The attrition index after hydrothermal treatment was assessed to be 13.2%.

Example 3-7

Further samples of phosphated aluminium oxide materials having a phosphate contents of 2, 5, 10, 15 and 20 wt%, respectively, were prepared in the same way as in Example 2, except that the amount of phosphoric acid added was varied as follows: 2% with 48.1 g of v/v=85% in 654 ml $H_2O$; 5% with 124.1 g of v/v=85% in 615 ml $H_2O$; 10% with 262.1 g of v/v=85% in 534 ml $H_2O$; 15% with 403.3 g of v/v=85% in 401 ml $H_2O$; 20% with 589.7 g in 341 ml $H_2O$.
These materials were assessed for attrition resistance after subjection to hydrothermal conditions as in Example 2. The attrition index was determined for each product and is compiled in Table 1 (Examples 3-7).

Example 8

A phosphated aluminium oxide material having a phosphate content ($P_2O_5$) of 5 wt% with respect to the weight of the phosphated aluminium oxide material was prepared by impregnating an aluminium oxide starting material with BET surface area of 222 $m^2$/g (PURALOX SCCa-150/230, Sasol) with phosphoric acid (120.8 g in 591 ml of $H_2O$) and drying and calcining the so-impregnated aluminium oxide starting material.
The attrition index after hydrothermal treatment at 200°C for 2 hours in water was 7.9%.

Example 9

A phosphated aluminium oxide material having a phosphate content ($P_2O_5$) of 5 wt% with respect to the weight of the phosphated aluminium oxide material was prepared by impregnating an aluminium oxide starting material with BET surface area of 184 $m^2$/g (PURALOX SCCa-30/170, Sasol) with phosphoric acid (114.7 g in 546 ml of $H_2O$) and drying and calcining the so-impregnated aluminium oxide starting material.
The attrition index after hydrothermal treatment at 200°C for 2 hours in water was 5.3%.

Example 10

A phosphated aluminium oxide material having a phosphate content ($P_2O_5$) of 5 wt% with respect to the weight of the phosphated aluminium oxide material was prepared by impregnating an aluminium oxide starting material with BET surface area of 7 $m^2$/g (PURALOX SCCa-25/5, Sasol) with phosphoric acid (194.3 g in 321 ml of $H_2O$) and drying and calcining the so-impregnated aluminium oxide starting material.
The attrition index after hydrothermal treatment at 200°C for 2 hours in water was 3.0%.
The Results of the Examples are summarised in Table 1 hereunder:

|  | Comparative Ex. 1 | Ex. 2 | Ex. 3 | Ex. 4 | Ex. 5 |
|---|---|---|---|---|---|
| % $P_2O_5$ | 0 | 1 | 2 | 5 | 10 |
| D10 [$\mu$m] | 50 | 50.7 | 50 | 53.7 | 50.0 |
| D50 [$\mu$m] | 74.3 | 74.9 | 73.4 | 79.2 | 73.2 |
| D90 [$\mu$m] | 108.5 | 109.3 | 106.3 | 116.5 | 106 |
| RSF | 0.79 | 0.78 | 0.77 | 0.79 | 0.77 |
| BET ($m^2$/g) | 189 | 189 | 157 | 170 | 141 |
| Mean Pore Radius (nm) | 4.6 | 4.2 | 4.6 | 4.2 | 4.6 |

(continued)

|  | Comparative Ex. 1 | Ex. 2 | Ex. 3 | Ex. 4 | Ex. 5 |
|---|---|---|---|---|---|
| Attrition Index after Hydrothermal Treatment (%) | 14.0 | 13.2 | 4.2 | 5.8 | 4.3 |

|  | Ex 6 | Ex. 7 | Ex. 8 | Ex. 9 | Ex.10 |
|---|---|---|---|---|---|
| % $P_2O_5$ | 15 | 20 | 5 | 5 | 5 |
| D10 [$\mu$m] | 54.1 | 52.6 | 108.2 | 33.2 | 32.2 |
| D50 [$\mu$m] | 80.5 | 74.8 | 160.8 | 98.4 | 51.9 |
| D90 [$\mu$m] | 122.7 | 107.8 | 237.2 | 107.9 | 85.6 |
| RSF | 0.85 | 0.74 | 0.80 | 0.76 | 1.02 |
| BET (m$^2$/g) | 110 | 78 | 192 | 156 | 6 |
| Mean Pore Radius (nm) | 4.6 | 4.6 | 3.9 | 4.6 | 1.7 |
| Attrition Index after Hydrothermal Treatment (%) | 1.2 | <1 | 7.9 | 5.3 | 3.0 |

From the above results, it can be seen that the phosphated aluminium oxide materials of the inventive examples (2-10) have a better attrition index after hydrothermal treatment than the (un-phosphated) aluminium oxide material of Comparative Example 1. In particular, the phosphated aluminium oxide materials of Examples 3 to 10 (having a phosphate content of at least 2% relative to the phosphated aluminium oxide material) by far outperform the (un-phosphated) aluminium oxide material of Comparative Example 1.

**Claims**

1. A phosphated aluminium oxide material having a phosphorus content, with all phosphorus accounted for as the equivalent $P_2O_5$, of between 1 and 20 wt% with respect to the weight of the phosphated aluminium oxide material, **characterised in that** the phosphated aluminium oxide material has:

   (a) a median particle size (D50) of between 40 and 170 $\mu$m; and
   (b) an attrition index A of less than 14% after treating the phosphated aluminium oxide material at 200°C for 2h in water, where

$$A\,[\%] = F6h - Fi$$

   with Fi = Volume fraction of particles <20 $\mu$m before performing the attrition test [%] and F6h = Volume fraction of particles <20 $\mu$m after performing the attrition test for 6 hours [%].

2. The phosphated aluminium oxide material of Claim 1, which has a BET surface area of between 2 and 200 m$^2$/g.

3. The phosphated aluminium oxide material of Claim 1 or Claim 2, which has a phosphorus content, with all phosphorous accounted for as the equivalent $P_2O_5$, of at least 2 wt% with respect to the weight of the phosphated aluminium oxide material.

4. The phosphated aluminium oxide material of any one of the preceding claims, which has a median particle size (D50) of between 50 and 165 $\mu$m, more preferably between 70 and 100 $\mu$m.

5. The phosphated aluminium oxide material of any one of the preceding claims, which has a particle Relative Span Factor (RSF) of less than 1.2, preferably less than 1.1, most preferably less than or equal to 1.02, where

$$RSF = (D90 - D10)\,/\,D50$$

6. The phosphated aluminium oxide material of any one of the preceding claims, which has a particle size distribution such that. D10 < 110 $\mu$m, preferably D10 < 60 $\mu$m, and D90 < 240 $\mu$m, preferably D90 < 120 $\mu$m.

7. The phosphated aluminium oxide material of any one of the preceding claims, which has a mean pore radius of between 1.5 and 5 nm.

8. The phosphated aluminium oxide material of any one of the preceding claims, which has a silica content of less than 0.5% with respect to the weight of the phosphated aluminium oxide material.

9. The phosphated aluminium oxide material of any of the preceding claims which is prepared by impregnating an aluminium oxide starting material with a phosphate precursor and drying and calcining the so-impregnated aluminium oxide starting material to obtain the phosphated aluminium oxide material.

10. The phosphated aluminium oxide material of Claim 9, wherein the aluminium oxide starting material is an alpha alumina, a gamma alumina, a delta alumina, or a theta alumina

11. The phosphated aluminium oxide material of Claim 9 or Claim 10, wherein the phosphate precursor is phosphoric acid, phosphonic acid, ammonium phosphates ($NH_4)H_2PO_4$, $(NH_4)_2HPO_4$), $(NH_4)_3PO_4$), or ammonium polyphosphate, preferably phosphoric acid.

12. Use of the phosphated aluminium oxide material of any of the preceding claims as a catalyst support, in particular as a catalyst support for a catalyst in the presence of water and in a fluidized bed reactor.

Europäisches
Patentamt

European
Patent Office

Office européen
des brevets

# EUROPEAN SEARCH REPORT

**Application Number**

EP 24 21 7317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | KUKADE SOMANATH ET AL: "Comparative study of attrition measurements of commercial FCC catalysts by ASTM fluidized bed and jet cup test methods", POWDER TECHNOLOGY, ELSEVIER, BASEL (CH), vol. 301, 23 June 2016 (2016-06-23), pages 472-477, XP029728957, ISSN: 0032-5910, DOI: 10.1016/J.POWTEC.2016.06.040 * the whole document * | | INV. B01J35/38 B01J35/40 |
| X | US 2008/227625 A1 (STOCKWELL DAVID M [US]) 18 September 2008 (2008-09-18) * abstract * * paragraphs [0040], [0046]; tables 1,2 * | 1-12 | |
| X | HA KYOUNG-SU ET AL: "Effects of phosphorus and saccharide on size, shape, and reducibility of Fischer-Tropsch catalysts for slurry phase and fixed-bed reactions", APPLIED CATALYSIS A: GENERAL, ELSEVIER, AMSTERDAM, NL, vol. 453, 9 January 2013 (2013-01-09), pages 358-369, XP028976051, ISSN: 0926-860X, DOI: 10.1016/J.APCATA.2012.12.048 * abstract * * experimental part * | 1-12 | TECHNICAL FIELDS SEARCHED (IPC) B01J |

The present search report has been drawn up for all claims

| Place of search | Date of completion of the search | Examiner |
|---|---|---|
| Munich | 10 June 2025 | Fischbach, Malaika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 7317

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | Publication date |
|---|---|---|---|
| US 2008227625 A1 | 18-09-2008 | TW 200621361 A | 01-07-2006 |
| | | US 2006040823 A1 | 23-02-2006 |
| | | US 2008227625 A1 | 18-09-2008 |
| | | WO 2006023291 A1 | 02-03-2006 |

For more details about this annex : see Official Journal of the European Patent Office, No. 12/82